# NEUE EUROPÄISCHE PATENTSCHRIFT

(11) **EP 1 305 999 B2**
(45) Veröffentlichungstag und Bekanntmachung des Hinweises auf die Entscheidung über den Einspruch: **12.08.2009**
(45) Hinweis auf die Patenterteilung: 03.05.2006
(21) Anmeldenummer: 02102481.5
(22) Anmeldetag: 24.10.2002
(51) Int. Cl.: A01D 45/02

(54) **Maschine zum Mähen von stängelartigem Erntegut**
Machine for mowing stalk crops
Machine pour faucher des plantes à tiges

(30) Priorität: 05.12.2001 DE 10159728; 26.10.2001 DE 10152984
(43) Veröffentlichungstag der Anmeldung: 02.05.2003
(73) Patentinhaber: Maschinenfabrik Kemper GmbH & Co. KG, 48703 Stadtlohn (DE)
(72) Erfinder: Wübbels, Richard, 46414, Rhede (DE)
(74) Vertreter: Holst, Sönke

(56) Entgegenhaltungen:
- EP-A- 0 760 200
- EP-A- 0 860 106
- EP-A- 1 008 291
- EP-A- 1 010 363
- EP-B1- 0 508 189

## Beschreibung

Die Erfindung betrifft eine Maschine zum Mähen von stängelartigem Erntegut, gemäß dem Oberbegriff des Anspruchs 1.

Die DE 40 02 344 A schlägt ein Erntevorsatzgerät vor, das aus Fördertrommeln mit vertikalen Drehachsen aufgebaut ist, denen mehrere Zuführwalzen vorgeordnet sind. Die Zuführwalzen schneiden das Gut ab. An ihrer Rückseite wird es von der Fördertrommel übernommen, die es im Zusammenwirken mit den stromab folgenden Zuführwalzen den Einzugswalzen eines Feldhäckslers zuführt. In einer anderen Ausführungsform sind vier Fördertrommeln seitlich nebeneinander angeordnet, die das Gut einer Querförderschnecke übergeben. Die Hüllkreise der Fördertrommel und der Zuführwalzen sowie benachbarter Zuführwalzen überdecken sich.

Die DE 199 53 521 A zeigt eine Schneid- und Fördervorrichtung für stängeliges Halmgut, die vier seitlich nebeneinander angeordnete Schneid- und Förderrotoren aufweist. Das von den Schneid- und Förderrotoren aufgenommene Erntegut wird durch rotierende Ausräumer aus den taschenförmigen Aussparungen der Schneid- und Förderrotoren ausgeräumt. Eine Querförderschnecke transportiert das Gut zur Mitte der Maschine, an der es einem Feldhäcksler zugeführt wird. Zwischen den äußeren Schneid- und Förderrotoren und der Querförderschnecke sind Zwischenförderrotoren angeordnet, deren Hüllkreise in den Hüllkreis der rotierenden Ausräumer eingreifen.

In der EP 0 760 200 A ist eine Maschine zum Mähen von stängelartigen Erntegut offenbart, bei der mehrere Einzugs- und Mähtrommeln über die Arbeitsbreite verteilt sind. Das Gut wird an der Rückseite der Einzugs- und Mähtrommeln entlang der Rückwand nach innen transportiert, wobei es im Zwickelbereich zwischen benachbarten Einzugs- und Mähtrommeln von Querfördertrommeln gefördert wird, die Schlitze in der Rückwand durchgreifen. Die inneren Einzugs- und Mähtrommeln übergeben das Gut jeweils einer Schrägfördertrommel mit einer nach vorn geneigten Drehachse, die den vertikalen Abstand zwischen der Arbeitsebene der Einzugs- und Mähvorrichtungen und der Ebene des Einzugsspalts des nachgeschalteten Feldhäckslers überbrückt.

Die EP 1 008 291 A schlägt eine Maschine zum Ernten von stängeligem Halmgut vor, die mit mehreren, über die Arbeitsbreite verteilten trommelförmigen Aufnahmeelementen zur Aufnahme und Förderung des Ernteguts versehen ist. Das Gut wird von den Aufnahmeelementen einem unabhängigen Querförderer zugeführt, der in Fahrtrichtung hinter den Aufnahmeelementen angeordnet ist. Der Querförderer fördert das Gut entlang einer Führungswand, die unmittelbar hinter den Aufnahmeelementen angeordnet ist. Als Querförderer werden Fördergurte oder Fördertrommeln verwendet, die umfangsseitig mit zahnkranzartigen Mitnahmeelementen ausgestattet sind. Die Hüllkreise benachbarter Mitnahmeelemente überdecken sich. Die am weitesten innen angeordneten Fördertrommeln lenken das Gut nach hinten um und fördern es in den Einzugskanal des Feldhäckslers.

Die in der EP 0 760 200 A offenbarte Maschine hat dadurch, dass die Querfördertrommeln mit den Einzugs- und Mähtrommeln zusammenwirken, den Vorteil einer kurzen Bauweise, sodass der sie tragende Feldhäcksler nur ein relativ geringes Drehmoment aufnehmen muss. Die Maschinen gemäß EP 1 008 291 A und DE 199 53 521 A sind wegen der unabhängig von den Einzugs- und Mähtrommeln wirkenden Querförderer wesentlich länger und belasten den Feldhäcksler stärker. Die Bauform gemäß DE 40 02 344 A ist für Arbeitsbreiten, wie sie mit den zuvor genannten Maschinen erzielt werden, nicht brauchbar.

Die der Erfindung zugrunde liegende Aufgabe wird darin gesehen, bei einer kompakten Maschine zum Mähen von stängelartigen Erntegut den Gutfluss zu verbessern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Bei einer Maschine zum Mähen von stängelartigem Erntegut sind mehrere Einzugs- und Mäheinrichtungen seitlich nebeneinander angeordnet. Das von mindestens einer der Einzugs- und Mäheinrichtungen geerntete Gut wird durch eine in den Hüllkreis der Einzugs- und Mäheinrichtung eintauchende, in Fahrtrichtung dahinter angeordnete Querfördereinrichtung in Querrichtung auf die Mitte der Maschine zu transportiert. Das Gut wird dort von einer Umlenkfördereinheit übernommen und nach hinten umgelenkt, so dass es in den Einzugskanal einer mit der erfindungsgemäßen Maschine verbundenen Erntemaschine, beispielsweise eines Feldhäckslers, gelangt. Die Hüllkreise der Querfördereinrichtung und der Umlenkfördereinheit sind sich überdeckend gestaltet.

Als Umlenkfördereinheit wird eine Schrägfördertrommel verwendet, die mit einer geringfügig nach vorn geneigten Drehachse versehen ist und das Gut in den Einzugskanal der Erntemaschine hebt. Die Schrägfördertrommel ist mit übereinander angeordneten Förderscheiben versehen, über deren Umfang Mitnehmer verteilt sind. Diese Mitnehmer können ein aggressives Förderverhalten aufweisen, um zu erreichen, dass das Gut aktiv aus der Querfördereinrichtung herausgeholt wird. Dazu können die Mitnehmer eine in Drehrichtung vorlaufende Oberfläche aufweisen, die etwa radial verläuft.

Die Querfördereinrichtung ist eine Querfördertrommel mit etwa vertikaler Drehachse. Auch die Querfördereinrichtung ist mit übereinander angeordneten Förderscheiben ausgestattet, welche mit Mitnehmern versehen sind. Die Mitnehmer der Querfördereinrichtung haben zweckmäßigerweise ein abweisendes Förderverhalten, damit die Umlenkfördereinheit das Gut leicht aus der Querfördereinrichtung herausnehmen kann. Derartige Eigenschaften können durch eine entgegen der Drehrichtung nachlaufende Krümmung der Mitnehmer erreicht werden. Die Überdeckung der Hüllkreise der Umlenkfördereinheit und der Querfördereinrichtung kann dadurch erzielt werden, dass die Mitnehmer beider Förderer jeweils zueinander vertikal und/oder azimutal versetzt angeordnet sind.

Auf diese Weise erreicht man eine Verbesserung des Guttransports. Die Übergabe des Guts von der Querfördereinrichtung auf die Umlenkfördereinheit gestaltet sich unproblematisch.

Die Umlenkfördereinheit kann als Ausnehmer auf die Querfördereinrichtung wirken, d. h. das Gut aus ihr herausheben. Ein separater Ausnehmer für die Querfördereinheit erübrigt sich somit.

Die erfindungsgemäße Maschine weist mindestens zwei Einzugs- und Mäheinrichtungen auf. Eine innere Einzugs- und Mäheinrichtung ist in der Regel direkt neben der Längsmittelebene der Maschine angeordnet und eine zweite Einzugs- und Mäheinrichtung auf derselben Seite der Maschine weiter außen, seitlich daneben. Die Querfördereinrichtung ist vorzugsweise derart angeordnet, dass ihr Hüllkreis in den Hüllkreis der zweiten Einzugs- und Mäheinrichtung eintaucht. Denkbar ist, dass er zusätzlich auch in den Hüllkreis der inneren Einzugs- und Mäheinrichtung eintaucht. Auch der Hüllkreis der Umlenkfördereinheit kann in den Hüllkreis der inneren Einzugs- und Mäheinrichtung eintauchen. Insbesondere, wenn die Maschine eine ungerade Anzahl an Einzugs- und Mäheinrichtungen aufweist, kann die hier als innere Einzugs- und Mäheinrichtung bezeichnete Einzugs- und Mäheinrichtung gegenüber der Längsmittelebene der Maschine seitlich versetzt sein.

In den Zeichnungen sind drei nachfolgend näher beschriebene Ausführungsbeispiele der Erfindung dargestellt. Es zeigt:
- Fig. 1: eine Draufsicht auf eine erste Ausführungsform einer erfindungsgemäßen Maschine zum Mähen von stängelartigem Erntegut,
- Fig. 2: eine Draufsicht auf eine zweite Ausführungsform einer Maschine zum Mähen von stängelartigem Erntegut,
- Fig. 3: eine Draufsicht auf eine dritte Ausführungsform einer Maschine zum Mähen von stängelartigem Erntegut, und
- Fig. 4: einen Querschnitt durch die in Figur 3 dargestellte Maschine entlang der Linie 4-4.

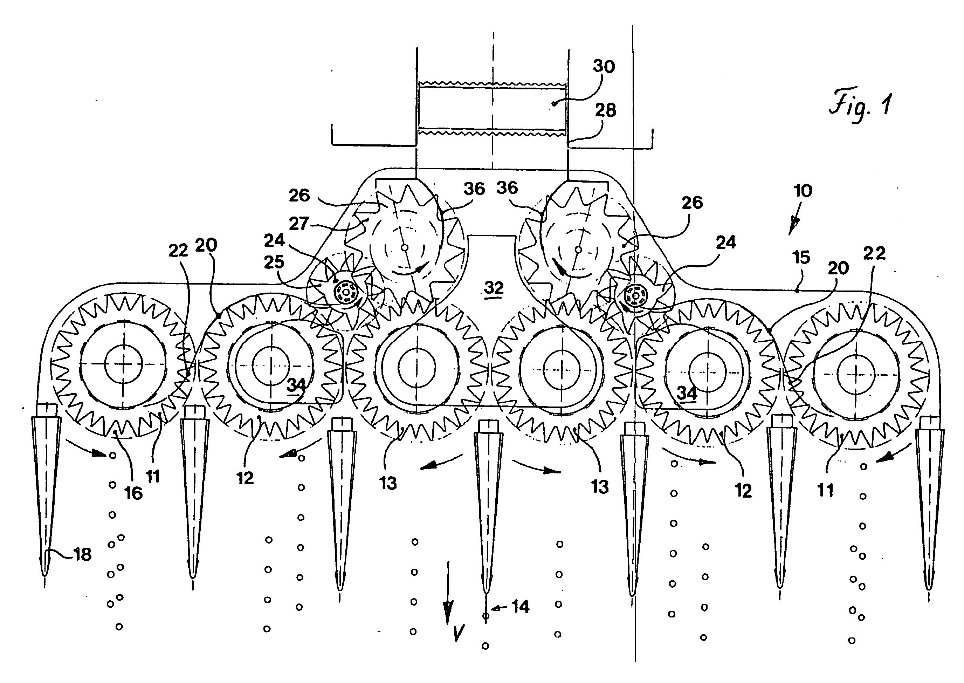

Die in Figur 1 dargestellte Maschine 10 zum Mähen von stängelartigem Erntegut weist sechs als Einzugs- und Mäheinrichtungen dienende Einzugs- und Mähtrommeln 11, 12 und 13 auf, die symmetrisch zu einer Längsmittelebene 14 der Maschine 10 angeordnet sind. Auf beiden Seiten der Längsmittelebene 14 sind je drei Einzugs- und Mähtrommeln 11, 12, 13 vorhanden. Die Maschine 10 wird von einem Rahmen 15 getragen.

Die reihenunabhängig arbeitenden Einzugs- und Mähtrommeln 11, 12, 13 sind aus einer unteren Schneidscheibe 16, die um eine etwa vertikal verlaufende Achse rotiert, und koaxial darüber angeordneten Förderscheiben zusammengesetzt, deren Umfang mit taschenförmigen Aussparungen ausgestattet ist. Die Schneidscheiben 16 trennen die oberen Teile des Ernteguts von den im Boden verbleibenden Stoppeln ab. Die Stängel des Ernteguts, bei dem es sich insbesondere um Mais handelt, werden in den taschenförmigen Aussparungen der Förderscheiben aufgenommen und festgehalten.

Den Einzugs- und Mähtrommeln 11, 12, 13 sind Halmteiler 18 vorgeordnet. Zwischen der Rückseite der Einzugs- und Mähtrommeln 11, 12, 13 und einer in ihrer Form an die Einzugs- und Mähtrommeln 12 angepassten Rückwand 20 der Maschine 10 ist ein Querförderkanal gebildet, durch den das von den Einzugs- und Mähtrommeln 11, 12, 13 abgeerntete Gut seitlich zur Mitte der Maschine 10 transportiert wird.

Die beiden äußeren Einzugs- und Mähtrommeln 11 werden derart in Drehung versetzt, dass das geerntete Gut zunächst seitlich in Richtung auf die Längsmittelebene 14 zu und dann entgegen der Fahrtrichtung V der Maschine 10 nach hinten gefördert wird. Dort wird das Erntegut von der nächstinneren Einzugs- und Mähtrommel 12 übernommen. Diese Einzugs- und Mähtrommel 12 dreht sich gegensinnig zu der benachbarten äußeren Einzugs- und Mähtrommel 11, so dass sie das geerntete Gut zunächst seitlich nach außen und anschließend nach hinten fördern. An ihrer der äußeren Einzugs- und Mähtrommel 11 zugewandten Seite übernimmt die Einzugs- und Mähtrommel 12 das Erntegut von der äußeren Einzugs- und Mähtrommel 11. Ein Ausnehmer 22, der aus in den Hüllkreis der äußeren Einzugs- und Mähtrommel 11 eingreifenden Blechen aufgebaut ist und das Erntegut aus den taschenförmigen Aussparungen der äußeren Einzugs- und Mähtrommel 11 hebt, bewirkt den Übergang des Ernteguts auf die Einzugs- und Mähtrommel 12, an deren Rückseite das Erntegut im Zusammenwirken mit der Rückwand 20 nach innen in Richtung auf die Längsmittelebene 14 zu gefördert wird.

Anschließend wird das Erntegut durch einen - nicht eingezeichneten - Ausnehmer aus den taschenförmigen Aussparungen der Einzugs- und Mähtrommel 12 herausgehoben und durch eine als Querfördereinrichtung dienende rotierende Querfördertrommel 24 mit etwa vertikaler Drehachse übernommen. Die Querfördertrommel 24 ist aus einem zylindrischen Körper mit daran übereinander befestigten Förderscheiben aufgebaut, um deren Umfang Mitnehmer 25 zur Förderung des Guts verteilt sind. Die Mitnehmer 25 weisen eine in Drehrichtung vorlaufende Oberfläche auf, die entgegen der Drehrichtung gekrümmt ist. Ihr Förderverhalten ist daher abweisend. Anstelle der zahnartigen Mitnehmer 25 können auch Finger verwendet werden. Die Querfördertrommeln 24 auf den beiden Seiten der Maschine 10 sind jeweils im Zwickelbereich zwischen den Rückseiten der mittleren Einzugs- und Mähtrommeln 12 jeder Seite der Maschine 10 und der inneren Einzugs- und Mähtrommeln 13 angeordnet. Die stromauf der Drehachse der Querfördertrommel 24 liegenden Mitnehmer 25 durchdringen Schlitze in der Rückwand 20. Die Rückwand 20 endet in der Nähe des zylindrischen Körpers der Querfördertrommel 24.

Die inneren Einzugs- und Mähtrommeln 13 drehen in der in Figur 1 dargestellten Ausführungsform in derselben Richtung wie die benachbarten Einzugs- und Mähtrommeln 12. Das von ihnen aufgenommene Erntegut wird somit ebenfalls zunächst nach außen und dann nach hinten gefördert. Es wird danach im Zusammenwirken mit der Querfördertrommel 24 weiter gefördert, deren Hüllkreis in den Hüllkreis der inneren Einzugs- und Mähtrommel 13 und der nächstäußeren Einzugs- und Mähtrommel 12 eindringt.

In Fahrtrichtung V hinter den beiden inneren Einzugs- und Mähtrommeln 13 sind als Umlenkfördereinheit vorgesehene Schrägfördertrommeln 26 mit nach vorn geneigten Drehachsen angeordnet, die das Erntegut nach hinten in einen Einzugskanal 28 eines Feldhäckslers mit darin übereinander angeordneten Einzugswalzen 30 fördern. Die Schrägfördertrommeln 26 sind aus zylindrischen Körpern mit daran übereinander angeordneten Förderscheiben aufgebaut, welche zum Guttransport mit Mitnehmern 27 versehen sind. Die in Drehrichtung vorlaufenden Flächen der Mitnehmer 27 der Schrägfördertrommeln 26 sind etwa radial angeordnet, sodass sich eine aggressive Förderwirkung ergibt. Anstelle der zahnartigen Mitnehmer 27 können auch Finger verwendet werden. Denkbar ist auch eine Steuerung der Mitnehmer 25 und/oder 27, die eine radiale Verschiebung und/oder azimutale Drehung der Mitnehmer 25 und/oder 27 bewirkt, um die Gutförderung und Übergabe zu verbessern.

Der Hüllkreis der Querfördertrommel 24 und der Hüllkreis der Schrägfördertrommel 26 überdecken sich, um die Übergabe des Guts zu optimieren. Dadurch erreicht man, dass die Querfördertrommeln 26 das Erntegut von den Querfördertrommeln 24 übernehmen, wobei separate Ausnehmer für die Querfördertrommeln 24 nicht erforderlich sind. Weiterhin überdeckt sich der Hüllkreis der Schrägfördertrommel 26 mit dem Hüllkreis der benachbarten, inneren Einzugs- und Mähtrommel 13. Die Einzugs- und Mähtrommeln 12 sind mit flachen Abdeckungen 34 versehen.

Das Umlenken des Ernteguts nach hinten durch die Schrägfördertrommeln 26 wird durch bogenförmige Umlenkkufen, die am Boden der Maschine 10 zwischen den Schrägfördertrommeln 26 angeordnet sind, und durch eine darüber angeordnete Abdeckung 32 erleichtert. Die vorderen Enden der Umlenkkufen wirken auch als Ausnehmer auf die inneren Einzugs- und Mähtrommeln 13. Stromab der Schrägfördertrommeln 26 sind Ausnehmer 36 vorgesehen, die das Erntegut aus den Schrägfördertrommeln 26 herausheben und einen reibungslosen Übergang in den Einzugskanal 28 bewirken.

Der Antrieb der Einzugs- und Mähtrommeln 11, 12, 13, der Querfördertrommeln 24 und der Schrägfördertrommeln 26 erfolgt mittels geeigneter Getriebe durch den Feldhäcksler. Beim Erntevorgang wird die Maschine 10 in Fahrtrichtung V über ein Feld bewegt. Das gegebenenfalls von Halmteilern 18 seitlich abgelenkte stängelartige Erntegut wird von den Einzugs- und Mähtrommeln 11, 12, 13 abgeschnitten und in den Querförderkanal hineingefördert. Durch die Förderwirkung der Rückseiten der den äußeren Einzugs- und Mähtrommeln 11 stromab folgenden Einzugs- und Mähtrommeln 12 und durch die Querfördertrommeln 24 sowie die Schrägfördertrommeln 26 erreicht das Erntegut die Rückseite der beiden inneren Einzugs- und Mähtrommeln 13, wo es durch die Umlenkkufen und die Abdeckung 32 nach hinten umgelenkt wird. Die Schrägfördertrommeln 26 führen das Erntegut den Einzugswalzen 30 des Feldhäckslers zu, wo es gehäckselt und auf einem Wagen abgelegt wird.

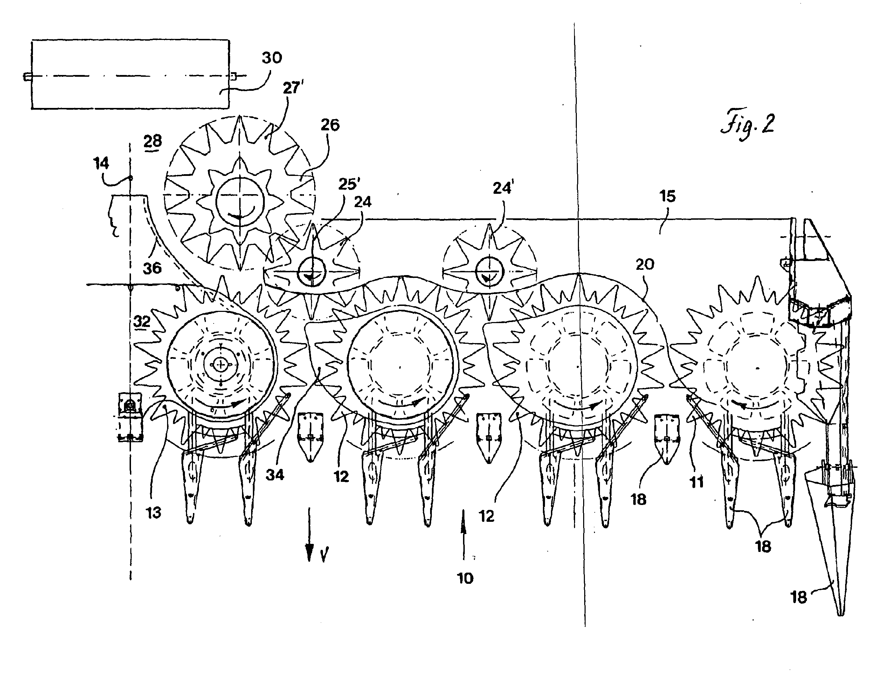

In Figur 2 ist eine Hälfte einer zweiten Ausführungsform einer Maschine zum Ernten stängelartigen Ernteguts dargestellt, die zur Längsmittelebene 14 symmetrisch aufgebaut ist. Der Ausführungsform nach Figur 1 entsprechende Elemente sind mit übereinstimmenden Bezugszeichen versehen. Die in Figur 2 dargestellte Maschine 10 weist eine größere Arbeitsbreite als die Maschine in Figur 1 auf, da zwei zusätzliche Einzugs- und Mähtrommeln 12 eingefügt sind. Im Zwickelbereich zwischen jeweils benachbarten Einzugs- und Mähtrommeln 12 ist eine Querfördertrommel 24' angeordnet, deren Förderscheiben Schlitze in der Rückwand 20 durchgreifen. Eine beliebige Vergrößerung der Arbeitsbreite ist durch Hinzufügen weiterer Einzugs- und Mähtrommeln 12 und Querfördertrommeln 24' möglich.

Die Schrägfördertrommel 26 gemäß dieser Ausführungsform greift im Unterschied zur ersten Ausführungsform nicht in den Hüllkreis der inneren Einzugs- und Mähtrommel 13 ein, sondern ist in einem gegenüber der ersten Ausführungsform größeren Abstand von der inneren Einzugs- und Mähtrommel 11 angeordnet. In der Figur 2 ist auch die Umlenkkufe 36 erkennbar, die stromab der inneren Einzugs- und Mähtrommel 13 angeordnet ist und das Gut nach hinten umlenkt. Derartige Umlenkkufen können auch in den anderen Ausführungsformen Verwendung finden.

Die Mitnehmer 25' der Querfördertrommeln 24 und die Mitnehmer 27' der Schrägfördertrommeln 26 sind - im Unterschied zu den übrigen Ausführungsformen - in der Draufsicht dreieckförmig und zu einer radialen Achse symmetrisch gestaltet.

Die Funktion der Maschine 10 gemäß Figur 2 entspricht der in Figur 1 wiedergegebenen Maschine. Das Gut wird durch die Einzugs- und Mähtrommeln 11, 12, 13 geerntet, im Querförderkanal durch die Rückseiten der Einzugs- und Mähtrommeln 12 und durch die Vorderseiten der Querfördertrommeln 24, 24' gefördert, dann durch die Rückseiten der inneren Einzugs- und Mähtrommeln 11 und mittels der Umlenkkufen 36 und der Schrägfördertrommeln 26 sowie einen ihr zugeordneten, nicht eingezeichneten Ausnehmer in den Einzugskanal 28 transportiert. Die einzelnen Einzugs- und Mähtrommeln 12 und 13 fügen dem Gutstrom im Querförderkanal jeweils das von ihnen abgemähte Gut hinzu.

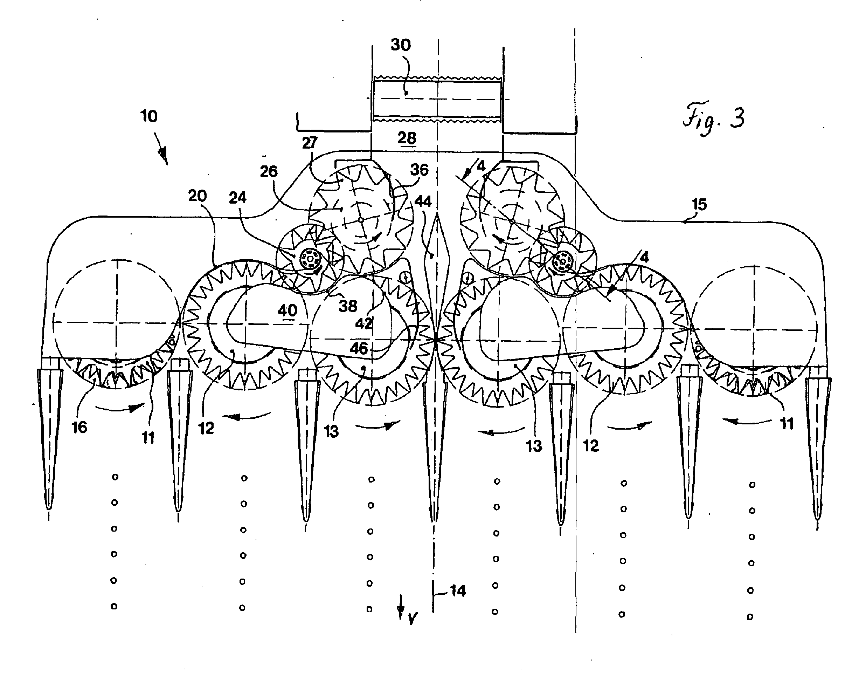

Eine dritte Ausführungsform einer Maschine zum Ernten stängelartigen Ernteguts ist in der Figur 3 dargestellt. Der Ausführungsform nach Figur 1 entsprechende Elemente sind mit übereinstimmenden Bezugszeichen versehen. Auch diese Ausführungsform kann, wie auch die erste Ausführungsform, in der oben beschriebenen Weise in Ausführungsformen mit größerer Arbeitsbreite abgewandelt werden.

Der Aufbau und die Funktion der äußeren und der nächstinneren Einzugs- und Mähtrommeln 11 und 12 entspricht der ersten Ausführungsform. Das Erntegut wird von der äußeren Einzugs- und Mähtrommel 11 nach innen und dann nach hinten gefördert, wo es dann durch einen Ausnehmer herausgehoben und von der Rückseite der nächstinneren Einzugs- und Mähtrommel 12 übernommen wird, die sich derart dreht, dass das Gut zunächst nach außen und dann nach hinten gefördert wird. Abgabeseitig wird das Gut durch einen weiteren Ausnehmer aus der Einzugs- und Mähtrommel 12 herausgehoben und von einer dahinter angeordneten Querfördertrommel 24 übernommen. Die Querfördertrommel 24 ist aus einem zylindrischen Körper mit daran übereinander angeordneten, gezahnten Förderscheiben aufgebaut. Der Hüllkreis der Querfördertrommel 24 taucht in den Hüllkreis der Einzugs- und Mähtrommel 12 ein. Die Querfördertrommel 24 wirkt nicht mit der Rückseite der inneren Einzugs- und Mähtrommel 13' zusammen, sondern fördert das Gut an einer in Fahrtrichtung V vor ihr liegenden festen (oder gegen eine Kraft beweglichen) Wand 38 entlang, die unterhalb einer die Einzugs- und Mähtrommel 12 und die innere Einzugs- und Mähtrommel 13' überdeckenden Abdeckung 40 angeordnet ist. Das Gut wird dann von einer Schrägfördertrommel 26 übernommen, die aus einem zylindrischen Körper mit übereinander angeordneten, gezahnten Förderscheiben aufgebaut ist. Die Schrägfördertrommeln 26 weisen nach vorn geneigte Drehachsen auf und fördern das Erntegut nach hinten in den Einzugskanal 28 des Feldhäckslers mit darin übereinander angeordneten Einzugswalzen 30. Auch die Schrägfördertrommeln 26 wirken mit jeweils einer vor ihnen angeordneten, festen oder gegen eine Kraft beweglichen Wand 42 zusammen, die durch ein am Boden der Maschine 10 befestigtes Element gebildet wird, das auch einen Ausnehmer 46 für die inneren Einzugs- und Mähtrommeln 13' bildet. Ein Ausnehmer 36 hebt das Erntegut abgabeseitig aus den Schrägfördertrommeln 26 heraus.

Die Querfördertrommel 24 und die Schrägfördertrommel 26 bilden somit einen Förderkanal für das von den äußeren Einzugs- und Mähtrommeln 11, 12 geerntete Gut, der von den inneren Einzugs- und Mähtrommeln 13' getrennt und von ihnen unabhängig ist. Um diesen Förderkanal realisieren zu können, ohne den Gutstrom darin in unerwünschter Weise umlenken zu müssen und ohne die in Fahrtrichtung V gemessene Länge der Maschine 10 zumindest im Bereich der mittleren und äußeren Einzugs- und Mähtrommeln 11, 12 wesentlich zu vergrößern, sind die Drehachsen der inneren Einzugs- und Mähtrommeln 13' gegenüber den anderen Einzugs- und Mähtrommeln 11, 12 in Fahrtrichtung V nach vorn versetzt.

Die inneren Einzugs- und Mähtrommeln 13' drehen sich gegenüber den nächstäußeren Einzugs- und Mähtrommeln 12 gegensinnig, so dass sie das Gut zunächst nach innen in Richtung auf die Längsmittelebene der Maschine 10 zu und dann nach hinten fördern. Das von den inneren Einzugs- und Mähtrommeln 13 geerntete Gut wird durch die Ausnehmer 46 aus ihren taschenförmigen Aussparungen herausgehoben, strömt an einem mittigen, am Boden der Maschine 10 angeordneten, etwa rautenförmigen Führungselement 44 entlang und vereinigt sich seitlich neben und geringfügig vor den Schrägfördertrommeln 26 mit dem Gutstrom im Förderkanal, der von den äußeren Einzugs- und Mähtrommeln 11, 12 stammt. Anschließend gelangt der vereinte Gutstrom in den Einzugskanal 28.

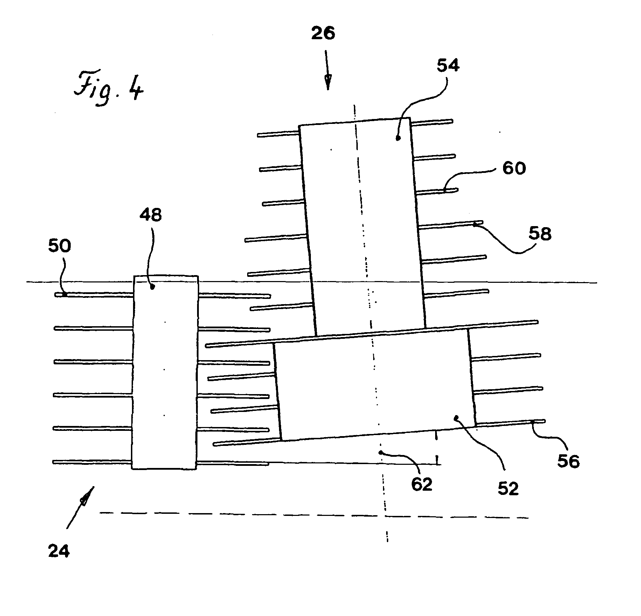

Die Hüllkreise der Förderscheiben der Querfördertrommel 24 und die Hüllkreise der Förderscheiben der Schrägfördertrommel 26 überdecken sich, so dass letztere das Erntegut aus der Querfördertrommel 24 heraushebt. Ein separater Ausnehmer für die Querfördertrommel 24 erübrigt sich. Der in Figur 4 dargestellte Querschnitt durch die Querfördertrommel 24 und die Schrägfördertrommel 26 verdeutlicht ihre Anordnung zueinander und zeigt, dass die Querfördertrommel 24 aus einem zylindrischen Körper 48 und daran befestigten, übereinander angeordneten Förderscheiben 50 aufgebaut ist. Die Schrägfördertrommel 26 weist einen unteren, zylindrischen Körper 52 und einen oberen Körper 54 mit gegenüber dem unteren Körper 52 verringerten Durchmesser auf. An den Körpern 52, 54 sind Förderscheiben 56, 58 und 60 mit sich nach oben stufenweise verringernden Durchmessern angebracht. Die Drehachse 62 der Schrägfördertrommel 26 ist um einen Winkel von etwa 5° zur Querfördertrommel 24 hin geneigt. Die Förderscheiben 50 der Querfördertrommeln 24 sind jeweils vertikal zwischen Förderscheiben 56 bzw. 58 der Schrägfördertrommeln 26 angeordnet. Die in Figur 4 dargestellte Anordnung der Querfördertrommel 24 und Schrägfördertrommel 26 findet auch in den Ausführungsformen gemäß Figur 1 und 2 Verwendung.

## Patentansprüche

1. Maschine (10) zum Mähen von stängelartigem Erntegut, mit
mehreren seitlich nebeneinander angeordneten Einzugs- und Mäheinrichtungen (11, 12, 13) zum Abschneiden und Fördern des Ernteguts,
einer in Fahrtrichtung hinter den Einzugs- und Mäheinrichtungen (11, 12, 13) angeordneten Umlenkfördereinheit, die eine Schrägföniertrommel (26) mit leicht nach vom geneigter Drehachse (62) und übereinander angeordneten, mit Mitnehmern (27) versehenen Förderscheiben (56, 58, 60) ist, die den vertikalen Abstand zwischen der Arbeitsebene der Einzugs- und Mäheinrichtungen (11, 12, 13) und der Ebene des Einzugskanals (28) der Erntemaschine überbrückt und zur Übernahme und Weiterführung des Emteguts in einen Einzugskanal (28) einer Erntemaschine eingerichtet ist,
sowie einer Querfördereinrichtung, die eine Querfördertrommel (24) mit etwa vertikaler Drehachse und übereinander angeordneten, mit Mitnehmern (25) versehenen Förderscheiben (50) ist und in Fahrtrichtung (V) hinter den Einzugsund Mäheinrichtungen angeordnet und zur Übernahme des Emteguts von wenigstens einer der Einzugs- und Mäheinrichtungen (11, 12, 13) und zur Weitergabe an die Umlenkfördereinheit vorgesehen ist,
wobei der Hüllkreis der Querfördereinrichtung in den Hüllkreis einer Einzugs- und Mäheinrichtung (12, 13) eindringt,
**dadurch gekennzeichnet, dass** sich der Hüllkreis der Querfördereinrichtung und der Hüllkreis der Umlenkfördereinheit überdecken.

2. Maschine (10) nach Anspruch 1, **dadurch gekennzeichnet, dass** die Umlenkfördereinheit das Gut aus der Querfördereinrichtung ausräumt.

3. Maschine nach Anspruch 1 oder 2, **dadurch gekennzeichnet, dass** die Mitnehmer ein aggressives Förderverhalten aufweisen.

4. Maschine nach Anspruch 3, **dadurch gekennzeichnet, dass** die Mitnehmer eine etwa radial verlaufende vorlaufende Oberfläche aufweisen.

5. Maschine (10) nach einen der Ansprüche 1 bis 4, **dadurch gekennzeichnet, dass** die Mitnehmer der Querfördertrommel ein abweisendes Förderverhalten aufweisen.

6. Maschine (10) nach Anspruch 5, **dadurch gekennzeichnet, dass** die Mitnehmer eine nach hinten gekrümmte vorlaufende Oberfläche aufweisen.

7. Maschine (10) nach einem der Ansprüche 1 bis 6, **dadurch gekennzeichnet, dass** unmittelbar seitlich einer Längsmittelebene (14) eine innere Einzugs- und Mähvorrichtung (13, 13') und eine zweite, ihr benachbarte, nächstäußere Einzugs- und Mäheinrichtung (12) nebeneinander angeordnet sind, und dass der Hüllkreis der Querfördereinrichtung in den Hüllkreis der zweiten Einzugs- und Mäheinrichtung (12) eingreift.

8. Maschine (10) nach Anspruch 7, **dadurch gekennzeichnet, dass** der Hüllkreis der Querfördereinrichtung auch in den Hüllkreis der inneren Einzugs- und Mäheinrichtung (13) eingreift.

9. Maschine (10) nach einem der Ansprüche 1 bis 8, **dadurch gekennzeichnet, dass** der Hüllkreis der Umlenkfördereinheit in den Hüllkreis einer seitlich unmittelbar neben einer Längsmittelebene (14) angeordneten inneren Einzugs- und Mähvorrichtung (13) eingreift.

## Claims

1. Machine (10) for reaping stalk-like crop, having
a plurality of intake and reaping devices (11, 12, 13) which are disposed laterally adjacently for cutting and conveying the crop,
a deflecting conveyor unit which is disposed behind the intake and reaping devices (11, 12, 13) in the direction of travel which is a slope conveyor drum (26) with an axis of rotation (62) inclined slightly forwards and with conveyor discs (56, 58, 60) which are disposed one above the other and provided with entrainers, which drum bridges the vertical spacing between the working plane of the intake and reaping devices (11, 12, 13) and the plane of the intake channel (28) of the harvester and is fitted for taking over and guiding the crop further into an intake channel (28) of a harvester,
and a transverse conveyor device which is a transverse conveyor drum (24) with an approximately vertical axis of rotation and equipped with conveyor discs (56, 58, 60) which are disposed one above the other and provided with entrainers and is disposed behind the intake and reaping devices in the direction of travel (V), the transverse conveyor device provided for taking over the crop from at least one of the intake and reaping devices (11, 12, 13) and for transferring it to the deflecting conveyor unit,
the enveloping circle of the transverse conveyor device penetrating into the enveloping circle of an intake and reaping device (12, 13),
**characterised in that** the enveloping circle of the transverse conveyor device and the enveloping circle of the deflecting conveyor unit overlap.

2. Machine (10) according to claim 1, **characterised in that** the deflecting conveyor unit clears out the crop from the transverse conveyor device.

3. Machine according to claim 1 or 2, **characterised in that** the entrainers have an aggressive conveying behaviour.

4. Machine according to claim 3, **characterised in that** the entrainers have an approximately radially extending leading surface.

5. Machine (10) according to one of claims 1 to 4, **characterised in that** the entrainers of the transverse conveyor drum have a rejecting conveying behaviour.

6. Machine (10) according to claim 5, **characterised in that** the entrainers have a leading surface which is curved backwards.

7. Machine (10) according to one of the claims 1 to 6, **characterised in that,** directly laterally of a longitudinal central plane (14), an inner intake and reaping device (13, 13"') and a second next outer intake and reaping device (12) which is adjacent thereto are disposed adjacently, and **in that** the enveloping circle of the transverse conveyor device engages in the enveloping circle of the second intake and reaping device (12).

8. Machine (10) according to claim 7, **characterised in that** the enveloping circle of the transverse conveyor device engages also in the enveloping circle of the inner intake and reaping device (13).

9. Machine (10) according to one of the claims 1 to 8, **characterised in that** the enveloping circle of the deflecting conveyor unit engages in the enveloping circle of an inner intake and reaping device (13) which is disposed laterally directly next to a longitudinal central plane (14).

## Revendications

1. Machine (10) destinée à faucher des végétaux à tiges, comportant
plusieurs unités d'introduction et de coupe (11, 12, 13), agencées latéralement les unes à côté des autres et destinées à couper et transporter les végétaux,
un convoyeur de guidage, agencé dans le sens de déplacement derrière des unités d'introduction et de coupe (11, 12, 13), le convoyeur de guidage est un tambour de transport incliné (26) avec l'axe de rotation (62) faiblement incliné vers l'avant et équipé de disques de transport (56, 58, 60), qui sont disposés les uns au-dessus des autres et sont muni de taquets d'entraînement, le convoyeur de guidage couvre la distance verticale entre le plan de travail des unités d'introduction et de coupe (11, 12, 13) et le plan du canal d'introduction (28) de la récolteuse et équipé pour recevoir et acheminer les végétaux dans un canal d'introduction (28) d'une récolteuse,
ainsi qu'un convoyeur transversal, qui est un tambour de transport transversal (24) avec un axe de rotation sensiblement vertical et équipé de disques de transport (56, 58, 60), qui sont disposés les uns au-dessus des autres et sont muni de taquets d'entraînement et agencé dans le sens de déplacement (V) derrière des unités d'introduction et de coupe, le convoyeur transversal est prévu pour recevoir les végétaux provenant d'au moins l'une des unités d'introduction et de coupe (11, 12, 13) et pour les acheminer vers le convoyeur de guidage,
l'enveloppante du convoyeur transversal empiétant dans l'enveloppante d'une unité d'introduction et de coupe (12, 13),
**caractérisée en ce que** l'enveloppante du convoyeur transversal et l'enveloppante du convoyeur de guidage se recouvrent.

2. Machine (10) selon la revendication 1, **caractérisée en ce que** le convoyeur de guidage déblaye les végétaux contenus dans le convoyeur transversal.

3. Machine (10) selon la revendication 1 ou 2, **caractérisée en ce que** les taquets d'entraînement ont un comportement de transport agressif.

4. Machine (10) selon la revendication 3, **caractérisée en ce que** les taquets d'entraînement ont une surface amont orientée sensiblement dans le sens radial.

5. Machine (10) selon l'une quelconque des revendications 1 à 4, **caractérisée en ce que** les taquets d'entraînement du tambour de transport transversal ont un comportement s'opposant de transport.

6. Machine (10) selon la revendication 5, **caractérisée en ce que** les taquets d'entraînement ont une surface amont courbée vers l'arrière.

7. Machine (10) selon l'une quelconque des revendications 1 à 6, **caractérisée en ce que**, directement latéralement à un plan médian longitudinal (14), une unité d'introduction et de coupe intérieure (13, 13') et une deuxième unité d'introduction et de coupe extérieure (12), directement contiguë à cette dernière, sont agencées côte à côte et **en ce que** l'enveloppante du convoyeur transversal empiète dans l'enveloppante de la deuxième unité d'introduction et de coupe (12).

8. Machine (10) selon la revendication 7, **caractérisée en ce que** l'enveloppante du convoyeur transversal empiète également dans l'enveloppante de l'unité d'introduction et de coupe intérieure (13).

9. Machine (10) selon l'une quelconque des revendications 1 à 8, **caractérisée en ce que** l'enveloppante du convoyeur de guidage empiète dans l'enveloppante d'une unité d'introduction et de coupe intérieure (13), agencée latéralement directement à côté d'un plan médian longitudinal (14).
